# EUROPÄISCHE PATENTSCHRIFT

(11) **EP 2 735 432 B1**
(45) Veröffentlichungstag und Bekanntmachung des Hinweises auf die Patenterteilung: **27.06.2018**
(21) Anmeldenummer: 13193076.0
(22) Anmeldetag: 15.11.2013
(51) Int. Cl.: B29C 65/02, B29C 59/16, B29C 65/08, B29C 65/16, B29C 65/46, B29K 705/00

(54) **Verfahren zum Verbinden zweier Bauteile und Bauteilverbund**
Method for joining two structural members and composite component
Procédé destiné à relier deux composants et composant composite

(30) Priorität: 27.11.2012 DE 102012221605
(43) Veröffentlichungstag der Anmeldung: 28.05.2014
(73) Patentinhaber: Robert Bosch GmbH, 70442 Stuttgart (DE)
(72) Erfinder: Hoerlein, Rainer Heinrich, 70376 Stuttgart (DE); Kesel, Ingo, 71665 Vaihingen (DE)

(56) Entgegenhaltungen:
- WO-A2-2008/025351
- DE-A1-102008 040 782
- JP-A- 2007 230 051
- JP-A- 2009 226 643

## Beschreibung

### Stand der Technik

Die Erfindung betrifft ein Verfahren zum Verbinden zweier Bauteile nach dem Oberbegriff des unabhängigen Anspruchs.

Ein derartiges Verfahren ist aus der WO 2008/025351 A2 bekannt. Bei dem bekannten Verfahren ist es vorgesehen, dass an einem aus Keramik bestehenden Trägerelement eine Mikrostruktur ausgebildet ist, welche auf der dem aus Kunststoff bestehenden Abdeckelement zugewandten Seite angeordnet ist. Das Abdeckelement wird im Überdeckungsbereich mit dem Trägerelement durch Bestrahlung mittels einer Laserstrahlquelle aufgeschmolzen, sodass das Kunststoffmaterial in die Mikrostruktur eindringt, wobei gleichzeitig zwischen dem Trägerelement und dem Abdeckelement ein mechanischer Druck ausgeübt wird.

Aus der JP 2007 230051 A ist es bekannt, zwei aus Kunststoff bestehende plattenförmige Elemente unter Verwendung eines Laserstrahls zu verbinden, wobei im Verbindungsbereich eines der Bauteile dieses mit einer aufgerauten Oberfläche versehen ist. Genauere Einzelheiten bezüglich der Oberflächenstruktur sind der genannten Schrift nicht entnehmbar.

Aus der JP 2009 226643 A ist es bekannt, zwei Bauteile gegeneinander zu verpressen und mittels einer Laserstrahleinrichtung auf der der Laserstrahleinrichtung bzw. dem Laserstrahl abgewandten Seite des zweiten Bauteils am ersten Bauteil eine Oberflächenstruktur auszubilden, in der der verflüssigte Kunststoff des darüber angeordneten zweiten Bauteils eindringt. Charakteristisch für die Oberflächenstrukturen in der genannten Schrift ist es, dass diese im Querschnitt in etwa dreiecksförmig ausgebildet sind und gegenüber der Oberfläche und einem Winkel angeordnet sind bzw. verlaufen.

Aus der DE 10 2008 040 782 A1 der Anmelderin ist es darüber hinaus bekannt, an dem ersten Bauteil, das beispielsweise aus Metall, Keramik oder Kunststoff besteht, insbesondere mittels eines Laserstrahls eine Oberflächenstrukturierung erzeugt, die eine von einer Nanostruktur überlagerte Mikrostruktur aufweist. Anschließend wird auf das so bearbeitete erste Bauteil ein Kunststoff (Duroplast oder Thermoplast) aufgespritzt, der nach der Erstarrung das zweite Bauteil ausbildet. Durch die an dem ersten Bauteil erzeugte Oberflächenstrukturierung wird eine besonders gute Haftung des Kunststoffs auf dem ersten Bauteil, und insbesondere auch eine hohe Dichtigkeit der Verbindung zwischen den beiden Bauteilen erzielt. Das aus der Schrift bekannte Verfahren hat sich grundsätzlich bewährt, jedoch lässt sich das Verfahren, bedingt durch das Anspritzen des Kunststoffs am ersten Bauteil, nicht bei allen Bauteilgeometrien des ersten Bauteils anwenden. Insbesondere ist es nicht möglich, einen Überdeckungsbereich zwischen dem ersten Bauteil und dem zweiten Bauteil mit Kunststoff zu versehen, wenn im Überdeckungsbereich mit dem ersten Bauteil eine Ausnehmung oder ein Hohlraum ausgebildet ist, der z.B. nicht mittels eines Hilfselements (insbesondere einem Stempel) ausgefüllt werden kann. Das eine Anlagefläche für den verflüssigten Kunststoff beim Anspritzen bildende Hilfselement lässt sich insbesondere nicht dann anwenden, wenn am ersten Bauteil ein geschlossener Hohlraum ausgebildet ist, da dann das Hilfselement nicht in den Hohlraum ein- bzw. ausgeführt werden kann.

### Offenbarung der Erfindung

Ausgehend von dem dargestellten Stand der Technik liegt der Erfindung die Aufgabe zugrunde, ein Verfahren zum Verbinden zweier Bauteile sowie einen Bauteilverbund nach den Oberbegriffen der beiden unabhängigen Ansprüche derart weiterzubilden, dass insbesondere eine Verbindung zwischen den beiden Bauteilen in den Bereichen ermöglicht wird, in denen das erste Bauteil einen geschlossenen Hohlraum aufweist, der die Verwendung des angesprochenen Hilfselements zum Aufspritzen des Kunststoffs nicht ermöglicht. Darüber hinaus soll, unabhängig von einem ggf. vorhandenen Hohlraum, ein gegenüber dem Stand der Technik alternatives Verbindungsverfahren unter Verwendung einer strukturierten Oberfläche an dem ersten Bauteil aufgezeigt werden.

Diese Aufgabe wird erfindungsgemäß durch ein Verfahren zum Verbinden zweier Bauteile mit den Merkmalen des unabhängigen Anspruchs gelöst. Durch das Anschmelzen bzw. Verflüssigen des Kunststoffmaterials des zweiten Bauteils findet eine innige Verbindung bzw. Verzahnung des Kunststoffs des zweiten Bauteils mit der Oberflächenstruktur des ersten Bauteils statt, so dass eine sichere und feste Verbindung der beiden Bauteile nach dem (Wieder-)Erstarren des Kunststoffs ausgebildet wird.

Vorteilhafte Weiterbildungen des erfindungsgemäßen Verfahrens zum Verbinden zweier Bauteile sowie eines erfindungsgemäßen Bauteilverbunds sind in den jeweiligen Unteransprüchen angeführt.

Ganz besonders bevorzugt ist ein Verfahren, bei dem zumindest während des Aufschmelzens des Kunststoffs ein mechanischer Druck auf das zweite Bauteil ausgeübt wird, der das zweite Bauteil zumindest im Bereich der Oberflächenstruktur gegen das erste Bauteil drückt. Durch das Aufbringen des Drucks wird insbesondere eine definierte Anlage des zweiten Bauteils an dem ersten Bauteil erzielt und dadurch beim Aufschmelzen des Kunststoffs die Oberflächenstruktur am ersten Bauteil vollflächig ausgefüllt, so dass die größtmögliche Verbindungsfläche zwischen der Oberflächenstruktur des ersten Bauteils und dem Kunststoff des zweiten Bauteils ermöglicht wird.

Zur Einbringung der Wärmeenergie zum Aufschmelzen des Kunststoffs in der Verbindungszone gibt es, je nach konkretem Anwendungsfall, unterschiedliche Möglichkeiten. Bei einer ersten Variante des erfindungsgemäßen Verfahrens wird vorgeschlagen, dass das Aufschmelzen des Kunststoffs des zweiten Bauteils durch eine Induktionswärmequelle erfolgt. Alternativ und besonders bevorzugt erfolgt das Aufschmelzen des Kunststoffs des zweiten Bauteils jedoch durch eine Laserstrahlquelle bzw. durch einen Laserstrahl. Das Einbringen der Wärmeenergie mittels eines Laserstrahls hat insbesondere den Vorteil, dass die Laserstrahlenergie hochgenau in den Verbindungsbereich zwischen den beiden Bauteilen eingebracht werden kann. Wichtig bei der Anwendung einer Laserstrahlquelle ist jedoch, dass der Kunststoff für die Wellenlänge des Laserstrahls durchlässig ist. Dadurch wird verhindert, dass der Kunststoff auf der dem ersten Bauteil abgewandten Seite des zweiten Bauteils aufschmilzt. Das Aufschmelzen des Kunststoffs erfolgt somit dadurch, dass der Laserstrahl durch den Kunststoff des zweiten Bauteils hindurch dringt und im Verbindungsbereich auf das Metall auftrifft. Die Erwärmung des Metalls bewirkt durch Wärmeübertragung auf das zweite Bauteil im Verbindungsbereich das gewünschte Aufschmelzen des Kunststoffs auf der dem ersten Bauteil zugewandten Seite. Wichtig dabei ist auch, dass durch den Laserstrahl selbstverständlich das Material des ersten Bauteils nicht verflüssigt wird, da ansonsten insbesondere auch die Oberflächenstruktur an dem ersten Bauteil zerstört werden würde.

In wiederum alternativer Ausgestaltung kann es vorgesehen sein, dass das Aufschmelzen des Kunststoffs des zweiten Bauteils durch eine Ultraschallschweißeinrichtung erfolgt. Eine derartige Ultraschallschweißvorrichtung hat den Vorteil, dass diese üblicherweise derart gestaltet bzw. ausgebildet ist, dass durch sie ein mechanischer Druck auf das zweite Bauteil in Richtung zum ersten Bauteil ausgeübt wird, so dass ggf. auf zusätzliche, separate Einrichtungen zum Erzeugen des erwähnten mechanischen Drucks verzichtet werden kann.

Um eine bestmögliche Haftung des Kunststoffs an dem ersten Bauteil zur Erzeugung möglichst fester und dichter Verbindungen zwischen den beiden Bauteilen zu erzielen, ist es darüber hinaus vorgesehen, dass die Oberflächenstruktur an dem ersten Bauteil durch Überlagerung einer Mikrostruktur mittels einer Nanostruktur erzeugt wird. Diesbezügliche konkrete Ausgestaltungen einer derartigen Oberflächenstrukturierung sind in der DE 10 2008 040 782 A1 der Anmelderin offenbart. Dies betrifft insbesondere die konkreten geometrischen Größenordnungen der Mikrostruktur und Nanostruktur sowie die Verwendung der zur Erzeugung der Oberflächenstruktur geeigneten Strahlungsquelle (Laserstrahleinrichtung).
Bei einer Variante des erfindungsgemäßen Bauteilverbunds ist es vorgesehen, dass das zweite Bauteil mit dem ersten Bauteil nicht im gesamten Überdeckungsbereich des zweiten Bauteils mit dem ersten Bauteil verbunden ist. Eine derartige Ausbildung des Bauteilverbunds betrifft insbesondere den Fall, bei dem das erste Bauteil einen Hohlraum aufweist, der in Richtung zum zweiten Bauteil hin offen ist, wobei der Hohlraum bzw. die durch den Hohlraum begrenzte Öffnung am ersten Bauteil von dem zweiten Bauteil überdeckt ist. Insbesondere gestattet es ein derartig ausgebildeter Bauteilverbund Hohlräume derart zu gestalten, dass diese geschlossen werden können, wobei auf die Verwendung von Anlageelementen, die ansonsten beim Anbringen einer Kunststoffschicht entsprechend dem Stand der Technik erforderlich ist, verzichtet werden kann.
Um die Verflüssigung des Kunststoffs zu vereinfachen bzw. zu beschleunigen, ist es bevorzugt vorgesehen, dass das zweite Bauteil auf der dem ersten Bauteil zugewandten Seite zumindest im Verbindungsbereich eine unebene Oberflächenstruktur aufweist. Dadurch wird, insbesondere in Verbindung mit einer mechanischen Anpresskraft des zweiten Bauteils auf das erste Bauteil, eine erhöhte Flächenpressung zwischen den beiden Bauteilen im Verbindungsbereich erzielt, die den Aufschmelzprozess beschleunigt.
Bevorzugt ist eine derartige Oberflächenstruktur in Form spitzer Erhebungen, Rillen oder Stegen ausgebildet. Im Fall von Rillen bzw. Stegen sind diese dabei vorzugsweise als umlaufende Rillen bzw. Stege ausgebildet, so dass eine in sich geschlossene Kontur am zweiten Bauteil erzeugt wird.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine schematische Darstellung zur Erläuterung eines ersten erfindungsgemäßen Verfahrens zum Verbinden zweier Bauteile unter Verwendung einer Ultraschallschweißeinrichtung,
- Fig. 2: eine schematische Darstellung eines gegenüber Fig. 1 abgewandelten Verfahrens unter Verwendung einer Laserstrahlquelle und
- Fig. 3 und Fig. 4: den Verbindungsbereich zwischen zwei Bauteilen unter Anwendung eines erfindungsgemäßen Verbindungsverfahrens in vergrößerter Darstellung, bei dem an dem zweiten Bauteil jeweils eine speziell ausgebildete Oberfläche vorgesehen ist.

Gleiche Elemente bzw. Elemente mit gleicher Funktion sind in den Figuren mit den gleichen Bezugsziffern versehen.

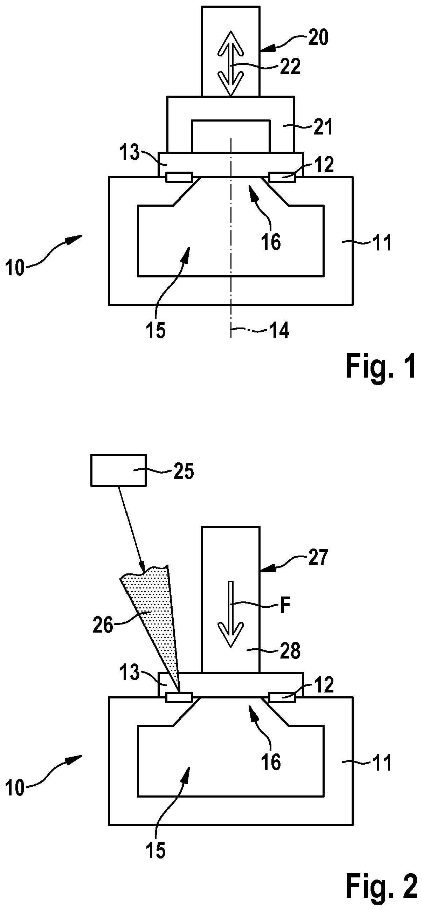

In der Fig. 1 ist ein Bauteilverbund 10, bestehend aus einem ersten Bauteil 11 und einem mit dem ersten Bauteil 11 in einem Verbindungsbereich 12 verbundenen zweiten Bauteil 13 dargestellt. Das erste Bauteil 11 ist beispielhaft als zylindrischer Körper mit einer Längsachse 14 ausgebildet. Er umfasst insbesondere einen in seinem Inneren ausgebildeten Hohlraum 15, der auf der dem zweiten Bauteil 13 zugewandten Oberseite eine Öffnung 16 aufweist, die von dem zweiten Bauteil 13 überdeckt bzw. verschlossen ist. Das zweite Bauteil 13 ist wiederum beispielhaft als Scheibe ausgebildet und bildet einen Deckel zum Verschließen der Öffnung 16 aus. Der Verbindungsbereich 12 ist im dargestellten Ausführungsbeispiel ringförmig ausgebildet und umgibt die Öffnung 16 an dem ersten Bauteil 11 mit geringem radialem Abstand.

Selbstverständlich liegt es im Rahmen der Erfindung, die Geometrie bzw. die Ausbildung der beiden Bauteile 11, 13 andersartig zu dem in der Fig. 1 dargestellten Ausführungsbeispiel zu gestalten.

Das erste Bauteil 11 besteht aus Metall, während das zweite Bauteil 13 in jedem Fall aus Kunststoff besteht. Weiterhin liegt der Schmelzpunkt bzw. die Schmelztemperatur des zweiten Bauteils 13, insbesondere, wenn das erste Bauteil 11 aus Kunststoff bestehen sollte, unterhalb des Schmelzpunkts des ersten Bauteils 11.

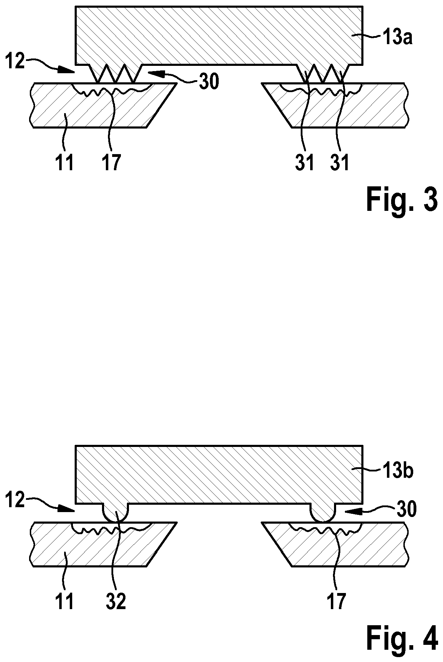

Wie lediglich anhand der Fig. 3 und 4 erkennbar ist, weist das erste Bauteil 11 im Verbindungsbereich 12 zwischen den beiden Bauteilen 11, 13 eine Oberflächenstruktur 17 auf, die eine Mikrostruktur umfasst, die von einer Nanostruktur überlagert ist. Wie eine derartige, von einer Nanostruktur überlagerte Mikrostruktur ausgebildet werden kann, ist der DE 10 2008 040 782 A1 der Anmelderin entnehmbar. Insbesondere wird die Oberflächenstruktur 17 durch eine nicht dargestellte Laserstrahleinrichtung in einem vorgelagerten Fertigungsschritt mittels eines Laserstrahls an dem Verbindungsbereich 12 des ersten Bauteils 11 erzeugt.

Um das zweite, vorgefertigte Bauteil 13 im Verbindungsbereich 12 mit dem ersten Bauteil 11 zu verbinden, findet bei dem in der Fig. 1 dargestellten Ausführungsbeispiel der Erfindung eine Ultraschallschweißeinrichtung 20 Verwendung. Die Ultraschallschweißeinrichtung 20 umfasst eine Sonotrode 21, deren Form auf der dem zweiten Bauteil 13 zugewandten Seite insbesondere der Form des Verbindungsbereichs 12 angepasst ist, d.h. im dargestellten Ausführungsbeispiel vorzugsweise ringförmig ausgebildet ist. Die Sonotrode 21 wird mittels der Ultraschallschweißeinrichtung 20 in Richtung des Doppelpfeils 22 in Schwingungen versetzt, wodurch aufgrund der Formgebung bzw. Einleitung der Schwingungen in das zweite Bauteil 13 eine Wärmeenergie in das zweite Bauteil 13 eingeleitet wird, die ein Aufschmelzen des Kunststoffs des zweiten Bauteils 13 im Verbindungsbereich 12 verursacht.

Als vorteilhafte Frequenzen der Sonotrode 21 haben sich Frequenzen zwischen 10kHz bis 70kHz erwiesen, bevorzugt Frequenzen zwischen etwa 20kHz bis 40kHz. Die Amplituden der Sonotrode 21 betragen vorzugsweise zwischen 10µm und 50µm, wobei grundsätzlich jedoch Amplituden ab 2µm möglich sind.

Der verflüssigte Kunststoff des zweiten Bauteils 13 gelangt dabei in die Oberflächenstruktur 17 des ersten Bauteils 11, so dass nach dem Ausschalten der Ultraschallschweißeinrichtung 20 und dem anschließenden Erstarren des Kunststoffs des zweiten Bauteils 13 zwischen den beiden Bauteilen 11, 13 im Verbindungsbereich 12 eine mechanisch belastbare, dichte Verbindung ausgebildet wird.

Bei dem in der Fig. 2 dargestellten Ausführungsbeispiel wird zum Aufschmelzen des Kunststoffs des zweiten Bauteils 13 im Verbindungsbereich 12 eine Laserstrahleinrichtung 25 verwendet, die einen Laserstrahl 26 erzeugt. Hierzu ist es insbesondere erforderlich, dass das Material des zweiten Bauteils 13 derart an die Frequenz bzw. die Wellenlänge des Laserstrahls 26 angepasst ist, dass das Material des zweiten Bauteils 13 für den Laserstrahl 26 transparent, d.h. laserstrahldurchlässig ist. Zusätzlich zur Laserstrahleinrichtung 25 wird das zweite Bauteil 13 mittels einer Andrückeinrichtung 27, die einen Stempel 28 umfasst, mit einer Kraft F in Richtung des ersten Bauteils 11 kraftbeaufschlagt. Das Aufschmelzen des Kunststoffs des zweiten Bauteils 13 findet durch Wärmeübertragung vom ersten Bauteil 11 in das zweite Bauteil 13 statt, da der Laserstrahl 26 das erste Bauteil 11 im Verbindungsbereich 12 auf eine Temperatur erwärmt, die über der Schmelztemperatur des zweiten Bauteils 13 liegt.

Bei den in den Fig. 1 und 2 dargestellten Ausführungsbeispielen weist das zweite Bauteil 13 auf der dem ersten Bauteil 11 zugewandten Seite eine ebene, d.h. glatte Oberfläche auf. Unter einer ebenen bzw. glatten Oberfläche wird dabei eine Oberfläche verstanden, die eine aufgrund der üblicherweise verwendeten Herstellungsverfahren übliche Oberflächenrauhigkeit aufweist.

Um ein verbessertes Aufschmelzen des Materials des zweiten Bauteils 13 zu ermöglichen, weist das Bauteil 13a gemäß der Fig. 3 auf der dem Verbindungsbereich 12 zugewandten Seite eine strukturierte Oberfläche 30 in Form von spritzen Erhebungen 31 auf. Die Erhebungen 31 können dabei in Art von Pyramiden, Spitzen oder ähnlichem ausgebildet sein. Insbesondere sind die Erhebungen 31 bzw. die strukturierte Oberfläche 30 im Verbindungsbereich 12 des ersten Bauteils 11 angeordnet.
Bei dem in der Fig. 4 dargestellten zweiten Bauteil 13b umfasst die strukturierte Oberfläche 30 beispielhaft einen ringförmig umlaufenden Steg 32, der eine geschlossene Kontur am zweiten Bauteil 13b ausbildet. Anstelle eines Stegs 32 ist es auch denkbar, eine ringförmig umlaufende Vertiefung in Form einer Nut oder ähnliches auszubilden.
Das soweit beschriebene Verfahren zum Verbinden der beiden Bauteile 11, 13, 13a, 13b kann in vielfältiger Art und Weise abgewandelt bzw. modifiziert werden, ohne vom Gegenstand der Ansprüche abzuweichen. Insbesondere sei nochmals darauf hingewiesen, dass die genaue geometrische Ausgestaltung der beiden Bauteile 11, 13, 13a, 13b von den dargestellten Ausführungsbeispielen abweichen kann.

## Patentansprüche

1. Verfahren zum Verbinden zweier Bauteile (11, 13), wobei das erste Bauteil (11) im Verbindungsbereich (12) zu dem zweiten Bauteil (13) zumindest bereichsweise mit einer durch eine Strahlungsquelle erzeugten Oberflächenstruktur (17) versehen ist, wobei das zweite Bauteil (13) aus Kunststoff besteht, und wobei das zweite Bauteil (13) als vorgefertigtes, festes Bauteil (13) ausgebildet ist und durch bereichsweises Aufschmelzen des Kunststoffs im Überdeckungsbereich mit der Oberflächenstruktur (17) und anschließendes Erstarren des Kunststoffs mit dem ersten Bauteil (11) verbunden wird,
**dadurch gekennzeichnet,**
**dass** die Oberflächenstruktur (17) durch Überlagerung einer Mikrostruktur mittels einer Nanostruktur erzeugt wird, und dass das erste Bauteil (11) aus Metall besteht.

2. Verfahren nach Anspruch 1,
**dadurch gekennzeichnet,**
**dass** zumindest während des Aufschmelzens des Kunststoffs ein mechanischer Druck (F) auf das zweite Bauteil (13) ausgeübt wird, der das zweite Bauteil (13) zumindest im Bereich der Oberflächenstruktur (17) gegen das erste Bauteil (11) drückt.

3. Verfahren nach Anspruch 1 oder 2,
**dadurch gekennzeichnet,**
**dass** das Aufschmelzen des Kunststoffs des zweiten Bauteils (13) durch eine Induktionswärmequelle erfolgt.

4. Verfahren nach Anspruch 1 oder 2,
**dadurch gekennzeichnet,**
**dass** das Aufschmelzen des Kunststoffs des zweiten Bauteils (13) durch eine Laserstrahleinrichtung (25) erfolgt.

5. Verfahren nach Anspruch 1 oder 2,
**dadurch gekennzeichnet,**
**dass** das Aufschmelzen des Kunststoffs des zweiten Bauteils (13) durch eine Ultraschallschweißeinrichtung (20) erfolgt.

## Claims

1. Method for joining two structural members (11, 13), the first structural member (11) being provided at least in certain regions in the joining area (12) with respect to the second structural member (13) with a surface structure (17) that is generated by a radiation source, the second structural member (13) consisting of plastic, and the second structural member (13) being formed as a prefabricated, solid structural member (13) and being joined to the first structural member (11) by melting the plastic in certain regions in the area of overlap with the surface structure (17) and subsequently making the plastic solidify,
**characterized**
**in that** the surface structure (17) is generated by overlaying a microstructure by means of a nanostructure, and in that the first structural member (11) consists of metal.

2. Method according to Claim 1,
**characterized**
**in that**, at least during the melting of the plastic, a mechanical pressure (F) is exerted on the second structural member (13) with the effect of pressing the second structural member (13) against the first structural member (11) at least in the region of the surface structure (17).

3. Method according to Claim 1 or 2,
**characterized**
**in that** the melting of the plastic of the second structural member (13) is performed by an induction heat source.

4. Method according to Claim 1 or 2,
**characterized**
**in that** the melting of the plastic of the second structural member (13) is performed by a laser beam device (25).

5. Method according to Claim 1 or 2,
**characterized**
**in that** the melting of the plastic of the second structural member (13) is performed by an ultrasonic welding device (20).

## Revendications

1. Procédé pour assembler deux éléments structurels (11, 13), le premier élément structurel (11), dans la zone de liaison (12) avec le deuxième élément structurel (13), étant pourvu au moins dans certaines zones d'une structure de surface (17) générée par une source de rayonnement, le deuxième élément structurel (13) se composant de matière plastique et le deuxième élément structurel (13) étant réalisé sous la forme d'un élément structurel (13) solide préfabriqué et étant assemblé avec le premier élément structurel (11) par fusion dans certaines zones de la matière plastique dans la zone de recouvrement avec la structure de surface (17) et ensuite solidification de la matière plastique,
**caractérisé en ce que**
la structure de surface (17) est générée par superposition d'une microstructure au moyen d'une nanostructure et **en ce que** le premier élément structurel (11) se compose de métal.

2. Procédé selon la revendication 1, **caractérisé en ce qu'**une pression mécanique (F) est exercée sur le deuxième élément structurel (13) au moins pendant la fusion de la matière plastique, laquelle pousse le deuxième élément structurel (13) contre le premier élément structurel (11) au moins dans la zone de la structure de surface (17).

3. Procédé selon la revendication 1 ou 2,
**caractérisé en ce que** la fusion de la matière plastique du deuxième élément structurel (13) est réalisée par une source de chaleur à induction.

4. Procédé selon la revendication 1 ou 2,
**caractérisé en ce que** la fusion de la matière plastique du deuxième élément structurel (13) est réalisée par un dispositif à rayonnement laser (25).

5. Procédé selon la revendication 1 ou 2,
**caractérisé en ce que** la fusion de la matière plastique du deuxième élément structurel (13) est réalisée par un dispositif de soudage aux ultrasons (20).
